# EUROPÄISCHE PATENTSCHRIFT

(11) **EP 1 151 829 B1**
(45) Veröffentlichungstag und Bekanntmachung des Hinweises auf die Patenterteilung: **31.05.2006**
(21) Anmeldenummer: 01110656.4
(22) Anmeldetag: 02.05.2001
(51) Int. Cl.: B25J 19/00, H01R 35/02, H02G 11/00

(54) **Schlauchführung im Sockel eines Roboters**
Hose guide in robot base
Guide de tuyau dans une base de robot

(30) Priorität: 05.05.2000 DE 20008054 U
(43) Veröffentlichungstag der Anmeldung: 07.11.2001
(73) Patentinhaber: KUKA Roboter GmbH, 86165 Augsburg (DE)
(72) Erfinder: Unglert, Peter, D-86169 Augsburg (DE)
(74) Vertreter: Lempert, Jost

(56) Entgegenhaltungen:
- DE-A- 4 214 863
- DE-A- 19 850 452
- DE-U- 9 200 618
- SE-C- 511 643
- US-A- 5 694 813

## Beschreibung

Die Erfindung betrifft eine Schlauchführung im Sockel eines Roboters, mit einem Schlauch mit einem unteren und mit einem oberen Schlaucharm, die durch einen gebogenen Schlauchkopf miteinander verbunden sind.

Zur Energieversorgung eines Roboters oder zur Energieversorgung von Werkzeugen an der Hand eines Roboters müssen Kabel im Hinblick auf die Drehbarkeit des Roboters und genauer die Drehbarkeit seines Karussells um die A1-Achse des Roboters relativ zum ortsfesten Sockel mit einer Reserve versehen sein. Hierzu sind sie im Robotersockel in Schläuchen, in der Regel in der Form von Rippenschläuchen geführt, die derart vertikal ausgerichtet sind, dass von einem Einführende ein unterer Schlaucharm entlang des Sockelbodens geführt ist, in einen vertikal gebogenen Schlauchkopf übergeht und von diesem in einen oberen Schlaucharm entlang der Unterseite des Karussells zu einer Austrittsöffnung in diesem zur Weiterführung der Kabel entlang des Roboters übergeht. Unterer und oberer Schlaucharm sind exakt vertikal übereinander geführt. Dieser Kabelschutzschlauch ist an der Außenwandung des Robotersockels und zwar entlang der dort gegebenen Mantelabdeckung geführt. Dies bedingt, dass sie an dem Sockelmantel entlangschleifen, wodurch sich ein Verschleiß mit dem erforderlichen Aufwand zur Überwachung, wiederholtem Auswechseln und damit Stillstand und erhöhten Rüstzeiten des Roboters ergibt. Darüber hinaus wird die Höhe des Sockels alleine durch den erforderlichen Mindestbiegeradius der Kabelschutzschläuche und der durch diese geführten Kabel bestimmt und ist deswegen beträchtlich und insbesondere größer als die aufgrund anderer konstruktiver Merkmale des Roboters im Bereich des Robotersockels, wie das Getriebe, erforderliche Höhe.

AUS SE 511 643 C2, übereinstimmend mit WO 0025990, ist eine Roboterleitungsführung entsprechend dem Oberbegriff des Anspruchs 1 bekannt.

Der Erfindung liegt daher die Aufgabe zugrunde unter Vermeidung der vorgenannten Nachteile eine verbesserte Schlauchführung zu schaffen.

Erfindungsgemäß wird die genannte Aufgabe bei einer Schlauchführung der eingangs genannten Art durch die im Kennzeichnenden Teil des Anspruchs 1 erfaßten Merkmale gelöst

Es wird vorgesehen, dass das Karussell einen den oberen Schlaucharm umgebenden, gegenüber diesem, im oberen Bereich, abgesenkten radial gerichteten Ringflansch aufweist, wobei der Ringflansch gegenüber einer den oberen Schlaucharm aufnehmenden Nut abgesenkt ist. Hierdurch wird einerseits auf der Oberseite des Karussells, nämlich genauer auf der Oberseite des abgesenkten Ringflansches desselben zusätzlicher Freiraum zur Aufnahme von konstruktiven Elementen, oder aber auch für eine Schlauchfortführung auf der Oberseite des Karussells geschaffen. Zum anderen kann hierdurch die Höhe des Robotersockels optisch weiter abgesenkt werden.

Alleine durch den horizontalen Versatz des oberen Schlaucharms relativ zum unteren Schlaucharm wird erreicht, dass der diese beiden verbindenden Schlauchkopf zur Vertikalen geneigt ist und hierdurch eine geringere Bauhöhe gegeben wird. Soweit eine vertikale Umfangswandung des Robotersockels vorgesehen ist, so wird durch den horizontalen Versatz der Schlauchkopf von dieser vertikalen Sockelwandung entfernt und damit erreicht, dass dieser Schlauchkopf bei der Bewegung des Schlauches - durch Verdrehen des Karussells relativ zum Sockel - nicht mehr an der Sockelwandung entlangschleift und der hierdurch bedingte Verschleiß wird dadurch ausgeschaltet.

Während grundsätzlich die Schrägstellung des Schlauches von unten nach oben und nach außenhin erfolgen könnte, ist in einer bevorzugten Ausgestaltung vorgesehen, dass der obere Schlaucharm relativ zum unteren Schlaucharm zur vertikalen Achse des Sockels hin, also radial nach innen versetzt ist. Hierdurch wird bei Erreichen der vorgenannten Vorteile eine Reduzierung der notwendigen Sockelhöhe sowie der Verminderung des Verschleißes bei radial und maximal vorgegebenen radialen Abmessungen des Robotersockels und einer diesen entsprechende breiten Aufsetzfläche erreicht, wie es bei der skizzierten vertikalen anderen Anordnung des Schlauches bzw. Schlauchkopfes im Sockel nicht der Fall wäre.

In einer bevorzugten Ausgestaltung ist weiterhin vorgesehen, dass der obere Schlaucharm in der Nut des Karussells des Roboters geführt ist, die einen geringeren Durchmesser hat als die Aufnahme des unteren Schlaucharms am Sockel des Roboters. Hierdurch wird eine sichere Führung des Schlauches, insbesondere des oberen Schlaucharmes erreicht.

Eine weitere Ausgestaltung sieht einen teilkegelförmigen Mantel des Sockels vor. Hierdurch wird dem Sockel bei optimaler Standfläche insbesondere ein gefälligeres Aussehen verliehen, wobei weiterhin im Hinblick auf die Reduzierung des oberen Bereichs des Sockels und damit des Karussellbereichs eine Materialeinsparung erzielt wird, ohne dass der auf den Boden aufsitzende Sockelfuß eine im Hinblick auf die Standfestigkeit reduzierte Fläche aufweisen muss.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind. Dabei zeigt:
- Fig. 1: einen bekannten Roboter in Seitenansicht;
- Fig. 2: eine Ausführungsform des Sockels eines bekannten Roboters im Schnitt;
- Fig. 3: eine bevorzugte Ausgestaltung des Erfindungsgegenstandes mit abgesenktem Radialflansch am Karussell eines Roboters und kegelstumpfförmig ausgebildetem Sockel;
- Fig. 4: eine Darstellung der erfindungsgemäßen Führung eines Schlauchs für die Kabel zur Energieversorgung der Roboterantriebe in einem Robotersockel mit Versatz vom oberen zum unteren Schlaucharm; und
- Fig. 5: eine Darstellung der erfindungsgemäßen Führung eines Schlauchs für Kabel zur Energieversorgung.

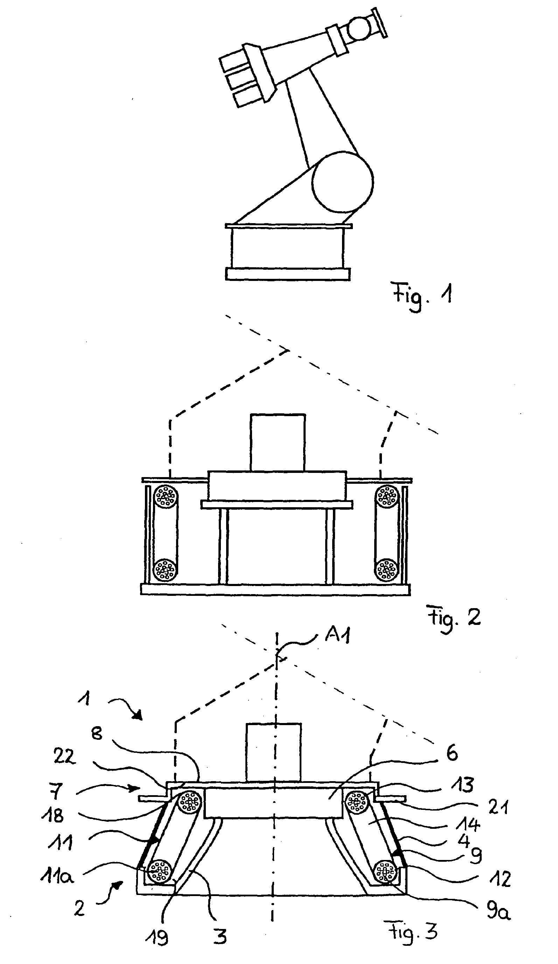

Die Fig. 1 zeigt einen bekannten Roboter in Seitenansicht mit einem zylindrischen Sockel. Die Fig. 2 zeigt geschnitten den Sockel des Roboters der Fig. 1. Es ist ersichtlich, dass die Kabelschläuche rechts und links U-förmig ausgebildet sind, wobei ein U-Steg vertikal ausgerichtet ist und die U-Schenkel der Schläuche genau vertikal übereinander liegen.

Die Fig. 3 zeigt, teilweise gebrochen, den unteren Bereich eines erfindungsgemäß ausgebildeten Roboters 1 mit ortsfestem Sockel 2, bestehend aus einem Sockelkern 3 und gegebenenfalls einem Sockelmantel 4. Auf dem Sockelkern 3 und getragen durch diesen befindet sich drehantreibbar über ein Getriebe 6 das Karussell 7 des Roboters mit einer Karussellplatte 8. Auf dieser befindet sich der weitere Aufbau des Roboters, so ein Motor zum Antrieb der Karussellplatte 8, eine Anlenkung, mit der die Schwinge um die A2-Achse der Anlenkung beweglich ist, sowie gegebenenfalls ein Drehmomentausgleich für die Schwinge. Diese Teile sind im einzelnen in der Fig. 3 nicht dargestellt, da sie für den Gegenstand der Erfindung nicht wesentlich sind.

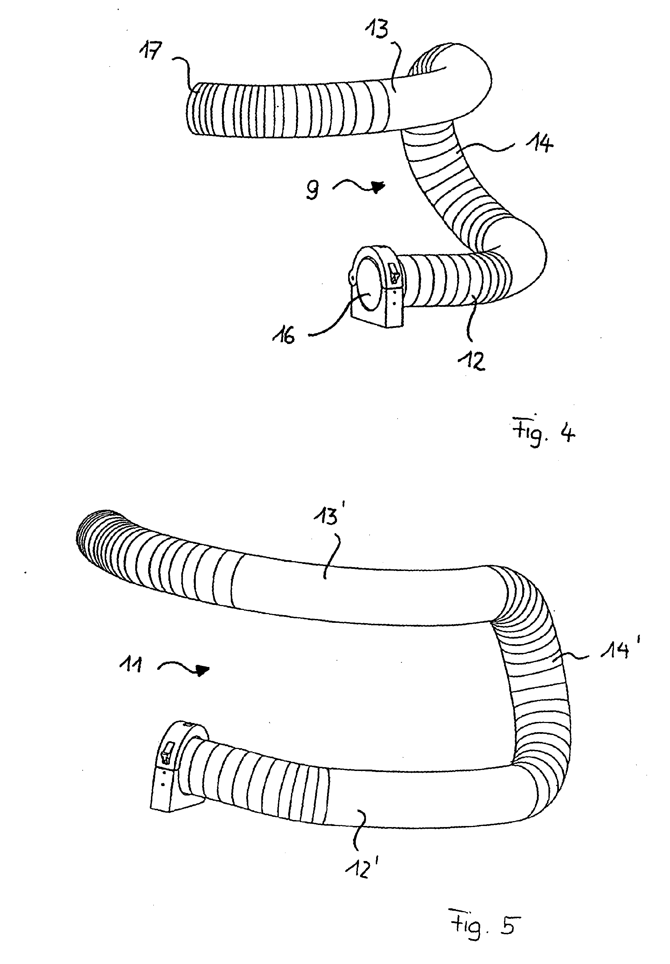

Bei dem dargestellten Roboter finden sich im Sockel 2 ein Schlauch 9 und gegebenenfalls ein Schlauch 11. Im Schlauch 9, der in der Regel als Rippenschlauch ausgebildet ist, sind Kabel 9a zur Energieversorgung der verschiedenen Antriebe des Roboters geführt, während im Schlauch 11 gegebenenfalls Kabel 11a zur Energieversorgung eines Werkzeugs des Roboters geführt sind. Die Schläuche 9, 11 bestehen, wie anhand des Schlauches 9 erläutert, aus einem unteren Schlaucharm 12 und einem oberen Schlaucharm 13, die über einen Schlauchkopf 14 (Fig. 4) miteinander verbunden sind. Der Schlaucharm 13 liegt höher als der Schlaucharm 12. Das freie Ende 16 des unteren Schlaucharms 12 ist ortsfest angeordnet, hier erfolgt die Einführung der Energieversorgungskabel von außerhalb. Das freie Ende 17 des oberen Schlaucharms 13 ist fest mit dem relativ zum Sockel 2 beweglichen Karussell 7 verbunden, verändert also bei Bewegungen des Roboters bzw. genauer des Karussells 7 desselben seine Position zum Eingangsende 16 des Schlauchs 9. Der Schlauch 9 bildet insgesamt eine Längenreserve zur Kompensation der erforderlichen Schlauchlänge bei Relativbewegung des Karussells 7 relativ zum Sockel 2. Der Schlauch 11 besteht demgemäß aus unterem Schlaucharm 12', Schlauchkopf 12' und oberem Schlaucharm 13' (Fig. 5).

Aus den die Erfindung zeigenden Figuren 3 bis 5 ist ersichtlich, dass der obere Schlaucharm 13, 13' nicht exakt vertikal über dem unteren Schlaucharm 12, 12' liegt, wie dies beim Stand der Technik der Fall ist, sondern der obere Schlaucharm 13 relativ zum unteren Schlaucharm 12 zur vertikalen A1-Achse des Roboters hin, also radial nach innen versetzt angeordnet ist und demgemäß auch einen geringeren Krümmungsradius aufweist als der Schlaucharm 12, 12'. Hierdurch wird, wie insbesondere aus der Fig. 3 in Verbindung mit der Fig. 4 erkennbar ist, vermieden, dass der Schlauchkopf 14, 14' an der vertikalen Wandung 4 des Robotersockels schleift, was, wie dies beim Stand der Technik der Fall ist und dort regelmäßig zu einem Verschleiß führt, der eine laufende Überprüfung des Zustandes des Schlauches und eine Neuerung desselben mit hoher Frequenz und den damit unerwünschten Folgen des Stillstandes des Roboters, zusätzlicher Rüstzeiten etc. bedingt.

Der obere Schlaucharm 13, 13' ist dabei in einer Nut 18 des Karussells geführt, die ebenfalls zur A1-Achse hin versetzt und damit radial nach innen versetzt ist gegenüber einer nutähnlichen Aufnahme 19 im unteren Bereich des Sockelkerns 3 für den unteren Schlaucharm 12.

Am Karussell 7 kann, wie dies in der Fig. 3 dargestellt ist, ein radial gerichteter Ringflansch 21 vorgesehen sein, der gegenüber der horizontalen Innenwandung der Nut 18 abgesenkt ist; die Höhe der horizontalen Innenwandung 22 der Nut 18 wird durch die erforderlichen Mindestbiegeradien des Schlauches bestimmt, die eine große Bauhöhe und daher eine Anordnung der Wandung 22 über dem Boden bedingen, dass die Höhe der Wandung 22 durch den Schlauch und seine Mindestbiegeradien vorgegeben ist.

Die Darstellungen der Fig. 4 und 5 zeigen die Schläuche 9, 11 wenn das Karussell gegenüber seiner Mittelposition im Uhrzeigersinn verschwenkt, so dass sich der Abstand des Schlauchkopfes 14 des Schlauches 9 der Eintrittsstelle des unteren Schlaucharms genähert hat, während der Schlauchkopf 14' des Schlauches 11 gegenüber der Normalposition zur Eintrittsstelle des unteren Schlaucharms 12' einen größeren Abstand hat.

Der gegenüber der Wandung 22 abgesenkte Ringflansch 21 ist außerhalb der Nut 18 vorgesehen, so dass auf ihrer oberen Seite damit Freiraum zur Aufnahme weiterer Elemente, wie beispielsweise der Fortführung des Schlauches außerhalb des Sockels 2 gegeben ist; darüber hinaus wird durch die erfindungsgemäße Schräganordnung der Schlauchführung zum einen die tatsächliche effektive Bauhöhe des Sockels reduziert, da der Schlauchkopf schräg angeordnet ist und daher bei gleichem Biegeradius eine geringere Bauhöhe einnimmt. Auch wird die optische Bauhöhe des Sockels bei der Ausgestaltung der Fig. 1 durch den abgesenkten Ringflansch 21 reduziert, was dem Robotersockel gegenüber herkömmlichen hohen Sockeln ein ansprechenderes Aussehen verleiht. Dieses wird darüber hinaus weiter unterstützt, wenn, wie dies in der Fig. 3 dargestellt ist, die Sockelwandung der geneigten Schlauchführung folgt die dortige Seitenwandung 4' des Sockels 2 konus- bzw. teilkegelstumpfförmig ausgebildet ist. Alternativ kann die Sockelumfangswand 4 auch vertikal ausgerichtet sein und mit dem äußeren Rand der Ringplatte 21 abschließen.

### Bezugszeichenliste

- 1: Roboter
- 2: Sockel
- 3: Sockelkern
- 4,4a: Sockelmantel
- 4': Seitenwandung
- 6: Getriebe
- 7: Karussell
- 8: Karussellplatte
- 9: Schlauch
- 11: Schlauch
- 12: unterer Schlaucharm
- 13: oberer Schlaucharm
- 14: Schlauchkopf
- 16: freies Ende des unteren Schlaucharms
- 17: freies Ende des oberen Schlaucharms
- 18: Nut
- 19: Aufnahme
- 21: Ringflansch
- 22: Innenwandung
- A1: A1-Achse

## Patentansprüche

1. Schlauchführung im ortsfesten Sockel (2) eines Roboters (1), mit einem Schlauch (9) mit einem unteren und mit einem oberen Schlaucharm (12,13), die durch einen gebogenen Schlauchkopf miteinander verbunden sind, wobei der obere Schlaucharm (13) relativ zum unteren Schlaucharm (12) in horizontaler Richtung hin versetzt geführt ist, **dadurch gekennzeichnet, dass** ein auf dem Sockel (2) drehbar angeordnetes Karussell (7) des Roboters einen den oberen Schlaucharm (13) umgebenden, gegenüber diesem, im oberen Bereich, abgesenkten radial gerichteten Ringflansch (21) aufweist, wobei der Ringflansch gegenüber einer den oberen Schlaucharm (13) aufnehmenden Nut (18) des Karussels (7) abgesenkt ist.

2. Schlauchführung nach Anspruch 1, **dadurch gekennzeichnet, dass** der obere Schlaucharm (13) relativ zum unteren Schlaucharm (12) zur vertikalen Achse (A1) des Sockels (2) hin versetzt ist.

3. Schlauchführung nach Anspruch 1 oder 2, **dadurch gekennzeichnet, dass** der obere Schlaucharm (13) in der Nut (18) des Karussells (7) des Roboters (1) geführt ist, die einen geringeren Durchmesser hat als die Aufnahme (19) des unteren Schlaucharms (12) am Sockel (2) des Roboters (1).

4. Schlauchführung nach einem der vorangehenden Ansprüche, **gekennzeichnet durch** einen teilkegelförmigen Mantel (4) des Sockels (2).

## Claims

1. Hose guide in the base (2) of a robot (1), having a hose (9) with a lower and an upper hose arm (12, 13) interconnected by a curved hose head, the upper hose arm (13) being horizontally guided in displaced manner relative to the lower hose arm (12), **characterized in that** a carrousel (7) placed in rotary manner on the base (2) of the robot has a radially directed annular flange (21) surrounding the upper hose arm (13) and lowered with respect thereto in the upper area, said annular flange being lowered with respect to a groove (18) of carrousel (7) receiving the upper hose arm (13).

2. Hose guide according to claim 1, **characterized in that** the upper hose arm (13) is displaced towards the vertical axis (A1) of base (2) relative to the lower hose arm (12).

3. Hose guide according to claim 1 or 2, **characterized in that** the upper hose arm (13) is guided in the groove (18) of carrousel (7) of robot (1) having a smaller diameter than the receptacle (19) of the lower hose arm (12) on base (2) of robot (1).

4. Hose guide according to one of the preceding claims, **characterized by** a part conical jacket (4) of base (2).

## Revendications

1. Guide de conduit dans la base (2) d'un robot (1), comprenant un conduit (9) présentant un tronçon de conduit inférieur et un tronçon de conduit supérieur (12,13), reliés entre eux par une tête de conduit coudée, le tronçon de conduit supérieur (13) étant guidé décalé en direction horizontale par rapport au tronçon de conduit inférieur (12), **caractérisé en ce qu'**un carrousel (7) monté tournant sur la base (2) du robot présente une bride annulaire (21) entourant le tronçon de conduit supérieur (13) abaissé dans sa partie supérieure par rapport à celui-ci et s'étendant radialement, la bride annulaire étant abaissée par rapport à une rainure (18) du carrousel (7) recevant le tronçon de conduit supérieur (13).

2. Guide de conduit selon la revendication 1, **caractérisé en ce que** le tronçon de conduit supérieur (13) est décalé par rapport au tronçon de conduit inférieur (12) en direction de l'axe vertical (A1) de la base (2).

3. Guide de conduit selon la revendication 1 ou 2, **caractérisé en ce que** le tronçon de conduit supérieur (13) est guidé dans la rainure (18) du carrousel (7) du robot (1) présentant un diamètre inférieur à celui du logement (19) du tronçon de conduit inférieur (12) dans la base (2) du robot (1).

4. Guide de conduit selon l'une quelconque des revendications précédentes, **caractérisé par** une enveloppe (4) partiellement conique de la base (2).
